# EUROPEAN PATENT SPECIFICATION

(11) **EP 3 820 801 B1**
(45) Date of publication and mention of the grant of the patent: **14.12.2022**
(21) Application number: 18765717.6
(22) Date of filing: 13.07.2018
(51) Int. Cl.: B65H 57/26, B29C 65/40, G02B 6/36, B29C 65/00, B05C 5/02

(54) **DEVICE AND METHOD FOR PLACING AND BONDING A FILAMENT ONTO A SUBSTRATE**
VORRICHTUNG UND VERFAHREN ZUM PLATZIEREN UND KLEBEN EINES FILAMENTS AUF EIN SUBSTRAT
DISPOSITIF ET PROCÉDÉ DE PLACEMENT ET DE COLLAGE D'UN FILAMENT SUR UN SUBSTRAT

(30) Priority: 12.07.2018 PT 2018110843
(43) Date of publication of application: 19.05.2021
(73) Proprietor: Bosch Car Multimedia Portugal, S.A., 4705-820 Braga (PT); Universidade do Minho, 4704-553 Braga (PT)
(72) Inventor: SILVA MAGALHÃES, Roberto Manuel, 4705-820 Braga (PT); FERREIRA ARCIPRESTE, Bruno Daniel, 4705-820 Braga (PT); MACHADO VIANA, Júlio César, 4800-058 Guimarães (PT); TEIXEIRA DE BARROS FERREIRA DA SILVA, Alexandre Manuel, 4800-058 Guimarães (PT); FERRIRA DA CRUZ, Sílvia Manuela, 4800-058 Guimarães (PT); SOUSA GOMES, José Miguel, 4800-058 Guimarães (PT); ALMEIDA LOPES, Manuel Henrique, 4800-058 Guimarães (PT); CARVALHO CEREJEIRA FONTES DELGADO, Isabel Alexandra, 4705-820 Braga (PT); DE SOUSA RIBAS, José Luís, 4705-820 Braga (PT)
(74) Representative: Patentree
(86) International application number: PCT/IB2018/055212
(87) International publication number: WO 2020/012230

(56) References cited:
- WO-A2-98/36306
- WO-A2-2012/112875
- US-A- 3 713 947
- US-A1- 2013 020 015
- US-A1- 2015 129 126

## Description

### Technical field

The present disclosure relates to a device and method for placing and bonding a filament on a substrate. The device and method of the present disclosure is able to control the dispensing of a bonding material, and optionally respective cure, while retaining the filament in the desired position in a single procedure.

### Background

The dispensing of filament and/or bonding material often involves repetitive processes that demand for high accuracy and precision techniques. Examples of these systems are vastly found in industry from 3D printing, where material is deposited layer by layer, to the dispensing of adhesive on car windshields in a production line.

Filament dispensing, and mounting systems usually integrate three main subsystems:
a dispensing mechanism, such as a nozzle, that dispenses the filament and/or
adhesive on a substrate;
a routing mechanism that guides the filament through a pre-determined path; and
a fixation system or technique to secure the filament in place.

Regarding the latter, several techniques are available: the filament can be liquefied by applying heat, as disclosed in the document US20160332187A1 or 3D printing and dispensed in layers. In a different technique, the filament can be previously encapsulated with a hardened adhesive compound with a lower melting temperature, as described in the document US20160129643A1. During the dispensing, the nozzle temperature rises above the adhesive melting point, but stays under the core filament melting point, thus bonding the filament to the substrate. Yet in another technique, the substrate where the filament will be dispensed may be previously impregnated with adhesive, as explained in document WO2002001264A1. Moreover, document US6883714B2 describes a method of optical filament scribing and circuit patterns with planar and non-planar portions, wherein the filament or the substrate or both have adhesive surface(s).

The document EP2410365A1 discloses a tool for routing an optical fibre or cable over a desired span on a visible supporting surface at a given premises. The routing applicator is dimensioned and arranged to travel over the supporting surface at the premises to route the fibre with the adhesive, while urging the fibre against the surface so that the fibre adheres to the surface.

The document WO2018002117A1 discloses an automatic mechanical spool changer for 3D printers which includes a filament guide and a pre-loading device. The input to the filament guide receives at least a primary filament from a primary spool and a secondary filament from a secondary spool.

Document US2013020015A1, in respect of which the preamble of claims 1 and 15 are delimited, discloses an apparatus and methods for routing an optical fiber over a desired span on a structural surface at a given premises are provided. When the optical fiber is unwound from a spool, the optical fiber attaches to the structural surface by an adhesive material. The adhesive material can be applied along the desired span, or portion thereof, before, during, or after the optical fiber is routed over the desired span.

Document US3713947A discloses a method and apparatus for installing electrical wire or the like along a predetermined path on the surface of a base member by providing a groove in the surface of the base member along the predetermined path, simultaneously positioning in the groove guide means for laying said electrical wire and nozzle means for applying a material for maintaining the electrical wire within the groove, and then feeding electrical wire and said material to said guide means and nozzle means while moving the guide means and said nozzle means along said groove.

Document US2015129126A1 discloses a bonding method and a bonding tool that enable quick and reliable bonding of an optical fiber to a structural body by a simple process, and a method for producing a structural body are provided. In an optical fiber, a strand is coated with a coating portion of a thermoplastic resin. At least one portion of the coating portion is heated and melted by a heater. The portion where the thermoplastic resin is melted of the optical fiber and a surface of a structural body are brought into contact with each other in a state in which the thermoplastic resin is melted. A molding roller pressure-bonds the optical fiber to the surface of the structural body. The thermoplastic, resin is then cooled and cured, so that the optical fiber is bonded to the structural body.

Document WO2012112875A2 discloses an elongated optical fiber cable assembly which includes an array of generally parallel optical fibers and an elongated adhesive web. The web has a surface in proximity to the optical fibers. The web may have openings to enhance lateral flexibility of the web. The optical fibers may be under tension. An apparatus and method of assembly are also provided.

These facts are disclosed in order to illustrate the technical problem addressed by the present disclosure.

### General Description

A device for placing and bonding a filament onto a substrate, and a method for placing and bonding a filament onto a substrate using a device, according to the present invention, are characterised by the features recited in the characterising portion of, respectively, claims 1 and 15.

The present disclosure relates to a device and method for placing and bonding a filament on a substrate. The device and method of the present disclosure are able to control the dispensing of a bonding material, and optionally respective cure, while retaining the filament in the desired position in a single procedure.

The present disclosure is advantageous as some types of filaments present a set of physical properties and operational modes that are challenging for placing and bonding a filament on a substrate. Among those filament characteristics may reside the relative high stiffness, brittleness to low radius curvatures and severe damage by heat fusion, and possible of existence of terminals. Moreover, the present disclosure is advantageous in avoiding previous impregnation of the substrate with adhesive. Furthermore, the present disclosure is also advantageous given the close distance requirements between the nozzle and the substrate and its components, which may pose space constraints along the dispensing path.

The present disclosure provides a device and method for the direct application of small diameter filaments onto a subtract/surface, in a manner that combines the following modules:
a dispensing system for the filament;
a bonding material impregnation system; and;
optionally a bonding cure device.

The present disclosure includes a modular setup with interchangeable parts that enables the use of different bound material and optionally a respective curing method. This device of the present disclosure is also compatible with the dispensing of filament with higher diameter terminations, such as connectors. Also, in the device of the present disclosure, the semi-rigid filament dispensing is only limited by the filament's outer diameter when applying it in substrates with surface space constraints.

Surprisingly the device and method of the present disclosure, provides a precise positioning of the filament both for manual or automatic operations. The present disclosure enables positioning/bonding process accuracy to enable subsequent further automated assembly for substantial reduction of assembly time.

The present disclosure provides a process to guide and bond a filament to a substrate.

The device and method of the present disclosure enables the filament dispensing and placement in a controlled and reproducible manner following linear and/or curvilinear motion. This may be done by a semi (e.g., a manual tool) or fully (e.g., a robotic arm) automated system.

In the present disclosure, bonding material may be glues, tapes, solder, or mixtures thereof, among others.

In the present disclosure, a curing device/method that may include humidity curing, temperature curing, UV light curing, pressure-based curing, or combinations thereof, among others.

In the present disclosure, filament one may be textile threads, optical fibre, optical cable, polymeric filaments or metallic strands, among others. In particular, an optical fibre.

In the present disclosure, a substrate is considered any kind of surface such as metallic, polymer, ceramic, composites, both as natural or synthetic surface, among others.

In the present disclosure, the device and method may comprise distinct parts:
(i) the control of the dispensed bonding material; (ii) the supply of the filament; and
(iii) the travelling motion of the system.

In an embodiment, in the dispenser nozzle for applying a bonding material, it should be taken into consideration the flow rate of the bonding material and the nozzle area to guarantee the desired width and height of the dispensed bonding material. For that, a dispenser nozzle was developed to dispense the bonding material in certain range of space to ensure the same contact area between the bonding material and the substrate.

In an embodiment, the other variable that may control the dispensed volume is the travelling speed, and consequently the feeding rate by which the filament is supplied.

In an embodiment, the travelling motion can be linear or curvilinear. The curvilinear motion can be achieved by the combination of translational and rotational movements of dispenser nozzle or the substrate in order to guarantee that the filament is tangent to the concavity tip.

In an embodiment, for the filament feeder over the substrate different approaches are considered:
in disclosed but not claimed passive feeding, the initial segment of the filament is bonded to the substrate surface, and as the applicator (main body) is moved around the substrate, the filament is pulled from the reel and deposited on the substrate; and
in active feeding, the filament is supplied by motorized pulleys.

An aspect of the present disclosure relates to a device for placing and bonding a filament onto a substrate, comprising: a filament feeder for feeding the filament over the substrate as the device moves in respect of the substrate; a dispenser nozzle for applying a bonding material over the filament fed over the substrate; wherein the dispenser nozzle comprises a concave tip for guiding the filament onto the substrate as the device moves in respect of the substrate.

Surprisingly, the filament concave tip of the dispenser nozzle ensures the correct placement of the filament from the filament feeding to the nozzle, even for small curvature radius and for significant placing and bonding speeds.

According to the invention, the filament feeder and dispenser nozzle are arranged for feeding filament and applying bonding material in synchronization with the movement of the device in respect of the substrate.

In an embodiment, the concave tip may be integrally formed in the dispenser nozzle.

According to the invention, the filament feeder comprises a guide for holding and driving the filament into said dispenser nozzle.

In an embodiment, the dispenser nozzle may be arranged to push the filament against the substrate, to create a thin and controlled layer.

In an embodiment, the device of the present disclosure may further comprise a support for moving the dispenser nozzle and the filament feeder along the substrate.

In an embodiment, the filament feeder is arranged for filament feeding tangent to the concave tip.

In an embodiment, the filament feeder comprises a motor for motorised filament feeding in synchronization with the movement of the device in respect of the substrate.

In an embodiment, the dispenser feeder comprises a motor for motorised bonding material feeding in synchronization with the movement of the device in respect of the substrate.

In an embodiment, the device of the present disclosure may further comprise bonding material curing means, preferably humidity curing, temperature curing, UV-light curing, pressure-based curing, or combinations thereof.

In an embodiment, the device of the present disclosure may further comprise a bonding material container for feeding the dispenser nozzle, preferably a cartridge.

In an embodiment, the filament feeder may comprise a filament container, preferably a filament reel, wheel or a pulley.

In an embodiment, the filament feeder may comprise temperature controlling means and/or force controlling means for the filament.

According to the invention, the filament feeder comprises an open channel filament feeding. An open channel filament feeding allows a faster mount and unmount of filaments, in particular with larger terminal dimensions.

In an embodiment, the dispenser nozzle has an adjustable angle and/or an adjustable distance from the filament feeder.

In an embodiment, the dispenser nozzle is a needle with a concave tip.

In an embodiment, the dispenser nozzle is a needle with a concave tip suitable for touching the substrate as the device moves in respect of the substrate for placing and bonding the filament onto the substrate.

According to the invention, the device of the present disclosure may comprise an electronic data processor configured for synchronizing the filament feeding speed and bonding material application rate with the speed of movement of the device in respect of the substrate.

In an embodiment, the device of the present disclosure may comprise a positioning mechanism for moving the device for placing and bonding the filament onto the substrate along a predetermined path.

In an embodiment, wherein the filament is an optical fibre or cable, a textile thread, a metallic strand, or a polymeric filament.

Another aspect of the present disclosure relates to a method for placing and bonding a filament onto a substrate, comprising the following steps: feeding the filament over the substrate as the device moves in respect of the substrate by a filament feeder; simultaneously applying a bonding material over the filament fed over the substrate by a dispenser nozzle; wherein the dispenser nozzle comprises a concave tip for guiding the filament onto the substrate as the device moves in respect of the substrate.

According to the invention, the filament feeding and bonding material applying is carried out in synchronization with the movement of the device in respect of the substrate.

According to the invention, the method of the present disclosure comprises synchronizing the filament feeding speed and bonding material application rate with the speed of movement of the device in respect of the substrate using an electronic data processor.

It is an advantage of the disclosure the controlled and reproducible manner of placing and bonding a filament onto a substrate, following a linear and/or curvilinear motion, using a semi- or fully-automated system.

In an embodiment, the filament guiding can be implemented by an external add-on module or integrated into the nozzle.

In an embodiment, the filament goes through the guiding system that positions it under the nozzle of the bonding material. With this procedure, it is possible to guarantee a continuous and consistent positioning of the filament on the substrate.

In an embodiment, the main body supports the bonding material cartridge and the filament reel.

In an embodiment, the dispensing rate takes into consideration the curing kinematics of the bonding material and the deposition rate. An embodiment of the application of the device and method of the present disclosure may be the instrumentation of complex populated Printed Circuit Board (PCB) with optical fibre sensors for strain measurement where high space constrains between components are present.

### Brief Description of the Drawings

The following figures provide preferred embodiments for illustrating the description and should not be seen as limiting the scope of invention.

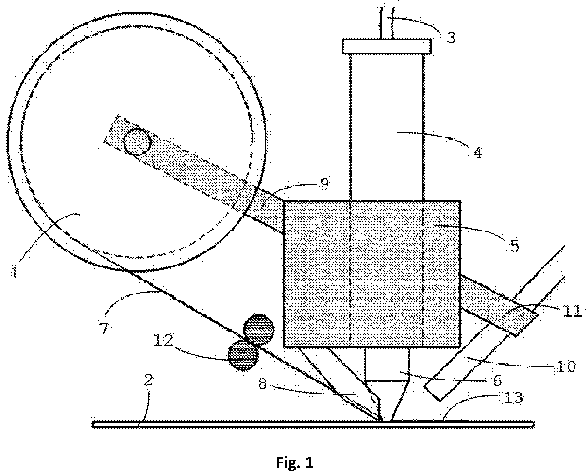

**Figure 1** is a schematic representation of the dispensing system.
**Figure 2** is a schematic representation of a dispenser nozzle.
**Figure 3** is a schematic representation of a dispenser nozzle with an external guiding system.
**Figure 4** is a schematic representation of a dispenser nozzle with an integrated guiding system.
**Figure 5** is a schematic representation of a needle dispenser nozzle with an integrated guiding system.

### Detailed Description

The description of the drawings parts of the dispensing system is made throughout the text with the numbering of all features. The drawing figures are not necessarily to scale and certain features may be shown in somewhat generalized or schematic form in the interest of clarity and conciseness.

In an embodiment, the dispensing system comprises: a reel **1** with the respective filament **7** ready to be used, a guiding system **8,** a dispenser nozzle **6,** a bonding material cartridge **4** coupled to a cartridge adapter **3** connected to a controlled bonding material rate device (not shown), a curing device **10,** a pulleys module **12,** and the main body of the structure **5.**

In an embodiment, the main body **5** is the base accessory of the device and allows to assembly all the parts (for example: filament feeder, dispenser nozzle, curing means, among others, etc).

In an embodiment, the curing device **10,** the pulley module **12,** and the external guiding system **8** are versatile add-ons components and may or may not be incorporated at the same time.

In an embodiment, the filament **7** comes out of the reel **1** and can be guided by the external guiding system **8** or by the integrated guiding system, depending on the nozzle being used, **14** or **16.** The filament **7** goes through the external or integrated guiding system that places it exactly under the nozzle **6** of the bonding material. This way, it is guaranteed a continuous and consistent positioning of the filament **7** on the substrate **2.** The external or integrated guiding system will hold and drive the filament **7,** preventing it from bouncing out. In case of filaments **7** with higher terminal dimensions, the external guiding system **8,** provides an open channelling design that allows the fast mount and unmount. The external guiding system **8** and the integrated guiding system **14** have the ability to position the filament **7** with a certain input angle.

In an embodiment, the nozzle **6** may be coupled to the cartridge **4** and is supported by the main body **5.** The dispenser nozzle **6** will dispense the bonding material over the filament **7** and substrate **2.**

In an embodiment, the dispenser nozzle **6** was developed to dispense the bonding material in certain range of space to ensure a homogeneous area between the bonding material and the substrate **2.**

In an embodiment, the nozzle **6** may push the filament **7** against the substrate **2** to create a thin and controlled layer. The result is the filament bonding to the substrate **13.**

In an embodiment, the supply of the filament **7** over the substrate **2** can be in disclosed but not claimed passive or active feeding. In the disclosed but not claimed passive feeding, the initial segment of the filament **7** is bonded to the substrate surface **2,** the applicator (main body) **5** is moved over the substrate **2,** and the filament **7** is pulled from the reel **1** and deposited on the substrate **2.** In active feeding, the filament **7** is supplied by motorized pulleys (not shown), at a controlled filament **7** feeding rate.

In an embodiment, the reel **1** is the filament-loaded device and is coupled to the main body **5** through an extension **9.**

In an embodiment, the cartridge **4** is the accessory part that supplies the bonding material and is directly attached to a dispenser nozzle **6.**

In an embodiment, the cartridge **4** is paired to a pressure or volumetric rate device (not shown), for bonding material dispensing control.

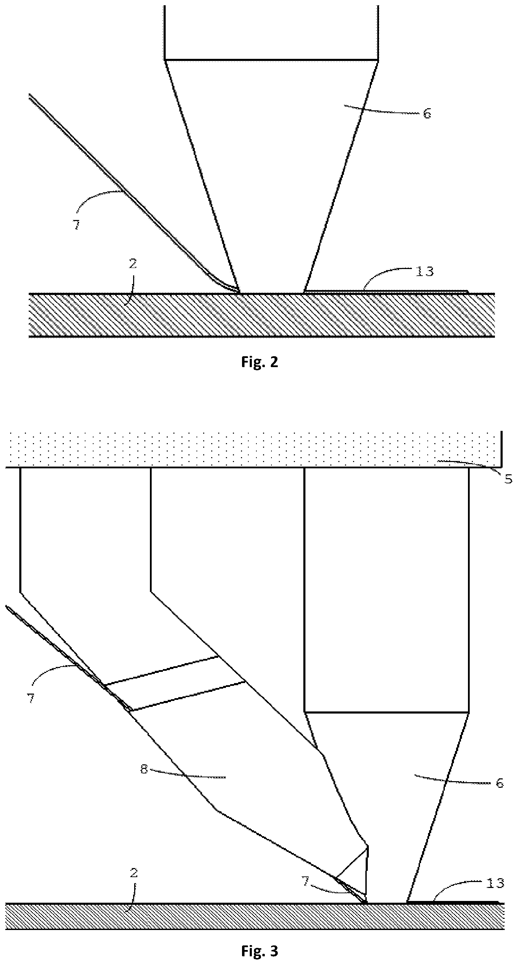

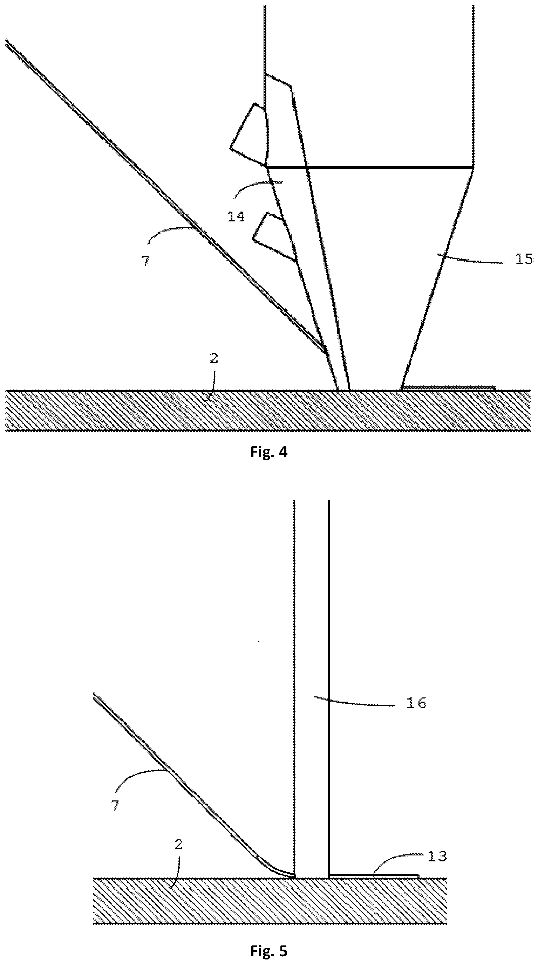

In an embodiment, the dispenser nozzle **6** can have different designs, from a needle nozzle **16 (****Figure 5****)** for tight spaces and basic filament positioning, to wider dispenser nozzles **6** with **(****Figure 2****,** **4****)** or without integrated guiding system **(****Figure 3****).**

In an embodiment, the nozzle solution of **Figure 4** comprises on an integrated guiding system formed by two assembled parts **(14** and **15),** which holds the filament **7** in the dispenser nozzle. In this arrangement, an external guiding system **8** is not needed for positioning the filament **7.**

In an embodiment, the dispensing system can incorporate a curing device **10,** through an extension **11** from the main body **5.** This curing device can have different typologies, such as UV light, hot air, or combinations thereof, among others, in order to solidify/cure the bonding material.

A fibre deposition speed in curvilinear motion was reached in an exemplary embodiment of up to 2 mm/s while making 180° curves. A fibre deposition speed in straight linear motion was reached in an exemplary embodiment of up to 10 mm/s.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above described embodiments are combinable. The following claims further set out embodiments of the disclosure.

## Claims

1. A device for placing and bonding a filament (7) onto a substrate (2), comprising:
a filament feeder (8) for feeding the filament at a filament feeding speed over the substrate (2) as the device moves in respect of the substrate (2);
a dispenser nozzle (6) for applying a bonding material at a bonding material application rate over the filament fed over the substrate;
wherein the dispenser nozzle (6) comprises a concave tip for guiding the filament (7) onto the substrate (2) as the device moves in respect of the substrate (2) at a speed of movement of the device in respect of the substrate,
**characterized in that**,
the filament feeder (8) comprises a guide for holding and driving the filament (7) into said dispenser nozzle (6);
the filament feeder (8) comprises an open channel for filament feeding; and
the device further comprises an electronic data processor configured for synchronizing the filament feeding speed and the bonding material application rate with the speed of movement of the device in respect of the substrate (2).

2. The device according to the previous claim wherein the concave tip is integrally formed in the dispenser nozzle (6).

3. The device according to any of the previous claims wherein the dispenser nozzle (6) is a needle with a concave tip suitable for touching the substrate (2) as the device moves in respect of the substrate (2) for placing and bonding the filament (7) onto the substrate (2).

4. The device according to any of the previous claims wherein the dispenser nozzle (6) is arranged to push the filament (7) against the substrate (2).

5. The device according the previous claim wherein the filament feeder (8) and dispenser nozzle (6) are arranged for feeding filament (7) and applying bonding material in synchronization with the movement of the device in respect of the substrate (2).

6. The device according to any of the previous claims wherein the filament feeder (8) comprises a motor for motorised filament feeding in synchronization with the movement of the device in respect of the substrate (2).

7. The device according to any of the previous claims wherein the dispenser nozzle (6) comprises a motor for motorised bonding material feeding in synchronization with the movement of the device in respect of the substrate (2).

8. The device according to any of the previous claims wherein the guide is arranged for filament feeding tangent to the concave tip.

9. The device according to any of the previous claims wherein the filament feeder (8) comprises a filament container (1).

10. The device according to the previous claim wherein the filament container (1) is a filament reel, wheel or a pulley.

11. The device according to the previous claim wherein the filament feeder (8)contains optical fibre.

12. The device according to any of the previous claims further comprising bonding material curing means (10).

13. The device according to the previous claim wherein the bonding material curing means (10) are selected from humidity curing, temperature curing, UV-light curing, pressure-based curing, or combinations thereof.

14. The device according to any of the previous claims comprising a positioning mechanism for moving the device for placing and bonding the filament (7) onto the substrate (2) along a predetermined path.

15. A method for placing and bonding a filament (7) onto a substrate (2) using a device, comprising the following steps: feeding the filament (7) at a filament feeding speed over the substrate (2) as the device moves in respect of the substrate (2) by a filament feeder (8) comprised in said device; simultaneously applying a bonding material at a bonding material application rate over the filament fed over the substrate (2) by a dispenser nozzle (6) comprised in said device;
wherein the dispenser nozzle (6) comprises a concave tip for guiding the filament (7) onto the substrate (2) as the device moves in respect of the substrate (2) at a speed of movement of the device in respect of the substrate, **characterized in that**,
the filament feeder (8) comprises a guide for holding and driving the filament (7) into said dispenser nozzle (6);
the filament feeder (8) comprises an open channel for filament feeding; and the method comprising synchronizing the filament feeding speed and bonding material application rate with the speed of movement of the device in respect of the substrate (2) using an electronic data processor comprised in said device.

## Patentansprüche

1. Eine Vorrichtung zum Platzieren und Kleben eines Filaments (7) auf ein Substrat (2), umfassend:
eine Filamentzuführung (8) für das Zuführen des Filaments mit einer Filamentzuführungsgeschwindigkeit über das Substrat (2), während sich die Vorrichtung in Bezug auf das Substrat (2) bewegt;
eine Dispenserdüse (6) zum Auftragen eines Klebemittels mit einer Klebemittelauftragsrate auf das über das Substrat geführte Filament;
wobei die Dispenserdüse (6) eine konkave Spitze zum Führen des Filaments (7) auf das Substrat (2) umfasst, wenn sich die Vorrichtung in Bezug auf das Substrat (2) mit einer Bewegungsgeschwindigkeit der Vorrichtung in Bezug auf das Substrat bewegt,
**dadurch gekennzeichnet, dass**,
die Filamentzuführung (8) eine Führung zum Halten und Einführen des Filaments (7) in die genannte Dispenserdüse (6) umfasst;
die Filamentzuführung (8) einen offenen Kanal für die Zuführung des Filaments umfasst;
und
die Vorrichtung ferner einen elektronischen Datenprozessor umfasst, der so konfiguriert ist, dass er die Filamentzuführungsgeschwindigkeit und die Klebemittelauftragsrate mit der Bewegungsgeschwindigkeit der Vorrichtung in Bezug auf das Substrat (2) synchronisiert.

2. Die Vorrichtung nach dem vorangehenden Anspruch, wobei die konkave Spitze vollständig in der Dispenserdüse (6) ausgebildet ist.

3. Die Vorrichtung nach einem der vorangehenden Ansprüche, wobei die Dispenserdüse (6) eine Nadel mit einer konkaven Spitze ist, die geeignet ist, das Substrat (2) zu berühren, während sich die Vorrichtung in Bezug auf das Substrat (2) bewegt, um das Filament (7) auf dem Substrat (2) zu platzieren und aufzukleben.

4. Die Vorrichtung nach einem der vorangehenden Ansprüche, wobei die Dispenserdüse (6) so angeordnet ist, dass sie das Filament (7) gegen das Substrat (2) drückt.

5. Die Vorrichtung nach dem vorangehenden Anspruch, wobei die Filamentzuführung (8) und die Dispenserdüse (6) so angeordnet sind, dass sie das Filament (7) zuführen und das Bindemittel synchron mit der Bewegung der Vorrichtung in Bezug auf das Substrat (2) auftragen.

6. Die Vorrichtung nach einem der vorangehenden Ansprüche, wobei die Filamentzuführung (8) einen Motor zur motorisierten Filamentzuführung synchron zu der Bewegung der Vorrichtung in Bezug auf das Substrat (2) umfasst.

7. Die Vorrichtung nach einem der vorangehenden Ansprüche, wobei die Dispenserdüse (6) einen Motor für die motorisierte Zuführen von Klebemittel synchron zu der Bewegung der Vorrichtung in Bezug auf das Substrat (2) umfasst.

8. Die Vorrichtung nach einem der vorangehenden Ansprüche, wobei die Führung so angeordnet ist, dass das Filament tangential zu der konkaven Spitze zugeführt wird.

9. Die Vorrichtung nach einem der vorangehenden Ansprüche, wobei die Filamentzuführung (8) einen Filamentbehälter (1) umfasst.

10. Die Vorrichtung nach dem vorangehenden Anspruch, wobei der Filamentbehälter (1) eine Filamentspule, ein Rad oder eine Rolle ist.

11. Die Vorrichtung nach dem vorangehenden Anspruch, wobei die Filamentzuführung (8) eine optische Faser enthält.

12. Die Vorrichtung nach einem der vorangehenden Ansprüche ferner umfassend Mittel zum Aushärten des Klebemittels (10).

13. Die Vorrichtung nach dem vorangehenden Anspruch, wobei die Mittel zum Aushärten des Klebemittels (10) ausgewählt werden aus Mitteln zur Härtung durch Feuchtigkeit, Temperatur, UV-Licht, Druck oder Kombinationen davon.

14. Die Vorrichtung nach einem der vorangehenden Ansprüche, umfassend einen Positionierungsmechanismus zum Bewegen der Vorrichtung für das Anbringen und Aufkleben des Filaments (7) auf dem Substrat (2) entlang eines vorbestimmten Wegs.

15. Das Verfahren zum Plazieren und Kleben eines Filaments (7) auf einem Substrat (2) unter Verwendung einer Vorrichtung, umfassend die folgenden Schritte: Zuführen des Filaments (7) mit einer Filamentzuführungsgeschwindigkeit über das Substrat (2), während sich die Vorrichtung in Bezug auf das Substrat (2) bewegt, durch eine in der genannten Vorrichtung enthaltene Filamentzuführung (8); gleichzeitiges Aufbringen eines Klebemittels mit einer Klebemittelauftragsrate auf das über das Substrat (2) geführte Filament durch eine in der Vorrichtung enthaltene Dispenserdüse (6);
wobei die Dispenserdüse (6) eine konkave Spitze zum Führen des Filaments (7) auf das Substrat (2) umfasst, während sich die Vorrichtung in Bezug auf das Substrat (2) mit einer Bewegungsgeschwindigkeit der Vorrichtung in Bezug auf das Substrat bewegt,
**dadurch gekennzeichnet, dass**
die Filamentzuführung (8) eine Führung zum Halten und Einführen des Filaments (7) in die genannte Dispenserdüse (6) umfasst;
die Filamentzuführung (8) einen offenen Kanal für die Zuführung des Filaments umfasst; und
das Verfahren das Synchronisieren der Geschwindigkeit der Filamentzuführung und des Auftragens des Klebemittels mit der Geschwindigkeit der Bewegung der Vorrichtung in Bezug auf das Substrat (2) unter Verwendung eines elektronischen Datenprozessors, der in der Vorrichtung enthalten ist, umfasst.

## Revendications

1. Un dispositif pour placer et coller un filament (7) sur un substrat (2), comprenant:
un distributeur de filament (8) pour distribuer le filament à une vitesse de distribution de filament sur le substrat (2) en même temps que le dispositif se meut suivant le substrat (2);
une buse distributrice (6) pour appliquer un matériau de collage à un taux d'application de matériau de collage sur le filament distribué sur le substrat ;
dans lequel la buse distributrice (6) comprend une pointe concave pour guider le filament (7) sur le substrat (2) en même temps que le dispositif se meut suivant le substrat (2) à une vitesse de mouvement du dispositif suivant le substrat,
**caractérisé en ce que**,
le distributeur de filament (8) comprend un guide pour stocker et conduire le filament (7) vers ladite buse distributrice (6) ;
le distributeur de filament (8) comprend un canal ouvert pour distribuer le filament; et
le dispositif comprend également un traiteur de données électronique configuré pour synchroniser la vitesse de distribution de filament et le taux d'application de matériau de collage avec la vitesse de mouvement du dispositif suivant le substrat (2).

2. Le dispositif selon la revendication précédente, dans lequel la pointe concave est intégralement formée dans la buse distributrice (6).

3. Le dispositif selon l'une quelconque des revendications précédentes, dans lequel la buse distributrice (6) est une aiguille avec une pointe concave adaptée pour toucher le substrat (2) en même temps que le dispositif se meut suivant le substrat (2) pour placer et coller le filament (7) sur le substrat (2).

4. Le dispositif selon l'une quelconque des revendications précédentes, dans lequel la buse distributrice (6) est arrangée pour pousser le filament (7) contre le substrat (2).

5. Le dispositif selon la revendication précédente, dans lequel le distributeur de filament (8) et la buse distributrice (6) sont arrangés pour distribuer du filament (7) et appliquer le matériau de collage en synchronisation avec le mouvement du dispositif suivant le substrat (2).

6. Le dispositif selon l'une quelconque des revendications précédentes, dans lequel le distributeur de filament (8) comprend un moteur pour motoriser la distribution de filament en synchronisation avec le mouvement du dispositif suivant le substrat (2).

7. Le dispositif selon l'une quelconque des revendications précédentes, dans lequel la buse distributrice (6) comprend un moteur pour motoriser la distribution de matériau de collage en synchronisation avec le mouvement du dispositif suivant le substrat (2).

8. Le dispositif selon l'une quelconque des revendications précédentes, dans lequel le guide est arrangé pour distribuer le filament de manière tangente à la pointe concave.

9. Le dispositif selon l'une quelconque des revendications précédentes, dans lequel le distributeur de filament (8) comprend un conteneur de filament (1).

10. Le dispositif selon la revendication précédente, dans lequel le conteneur de filament (1) est une bobine, roue ou poulie de filament.

11. Le dispositif selon la revendication précédente, dans lequel le distributeur de filament (8) contient de la fibre optique.

12. Le dispositif selon l'une quelconque des revendications précédentes comprenant également un moyen de séchage (10) du matériau de collage.

13. Le dispositif selon la revendication précédente, dans lequel le moyen de séchage (10) du matériau de collage est sélectionné parmi un séchage par humidité, séchage par température, séchage par lumière UV, séchage à base de pression, ou des combinaisons de ceux-ci.

14. Le dispositif selon l'une quelconque des revendications précédentes comprenant un mécanisme de positionnement pour mouvoir le dispositif pour placer et coller le filament (7) sur le substrat (2) le long d'un tracé prédéterminé.

15. Un procédé pour placer et coller un filament (7) sur un substrat (2) à l'aide d'un dispositif, comprenant les étapes suivantes: distribuer le filament (7) à une vitesse de distribution de filament sur le substrat (2) en même temps que le dispositif se meut suivant le substrat (2) par un distributeur de filament (8) compris dans ledit dispositif; appliquant simultanément un matériau de collage à un taux d'application de matériau de collage sur le filament distribué sur le substrat (2) par une buse distributrice (6) comprise dans ledit dispositif;
dans lequel la buse distributrice (6) comprend une pointe concave pour guider le filament (7) sur le substrat (2) en même temps que le dispositif se meut suivant le substrat (2), à une vitesse de mouvement du dispositif suivant le substrat,
**caractérisé en ce que**,
le distributeur de filament (8) comprend un guide pour stocker et conduire le filament (7) vers ladite buse distributrice (6);
le distributeur de filament (8) comprend un canal ouvert pour distribuer le filament; et
le procédé comprenant la synchronisation de la vitesse de distribution de filament et du taux d'application de matériau de collage avec la vitesse de mouvement du dispositif suivant le substrat (2) à l'aide d'un traiteur de données électronique compris dans ledit dispositif.
